# FASCICULE DE BREVET EUROPEEN

(11) **EP 2 228 569 B1**
(45) Date de publication et mention de la délivrance du brevet: **28.09.2011**
(21) Numéro de dépôt: 10156058.9
(22) Date de dépôt: 10.03.2010
(51) Int. Cl.: F16H 63/30, F16H 63/34

(54) **Système de commande pour une boîte de vitesses**
Steuersystem für Getriebe
Control system for a gearbox

(30) Priorité: 13.03.2009 FR 0951576
(43) Date de publication de la demande: 15.09.2010
(73) Titulaire: Peugeot Citroën Automobiles SA, 78140 Vélizy-Villacoublay (FR)
(72) Inventeur: Ploe, Pierre, 92800, Puteaux (FR)

(56) Documents cités:
- WO-A-96/10705
- DE-C- 718 615
- US-A- 4 510 818
- US-A- 4 510 819

## Description

La présente invention est relative à un système de commande pour une boîte de vitesses de véhicule, notamment de véhicule automobile.

Ce genre de système est connu du document US4510818 et du document WO-A-96/10705 dans lesquels un dispositif d'interverrouillage associé à des étriers de changement de vitesses permet d'autoriser des changements de rapport et d'interdire simultanément le passage d'un autre rapport. Un tel système doit permettre d'éviter l'actionnement simultané de deux synchroniseurs de la boîte de vitesses, ce qui est d'autant plus difficile dans le cas où un synchroniseur d'un rapport de marche avant de la boîte de vitesses permet de freiner un arbre de la boîte de vitesses pour le passage de la marche arrière avec les pignons de marche arrière à l'arrêt, ces derniers étant, dans ce cas, dépourvus de tout système de synchronisation.

De plus le document WO-A-96/10705 forme l'état de la technique le plus proche selon le préambule de la revendication 1.

La présente invention a notamment pour but de proposer une alternative au système de l'art antérieur en évitant de dégrader la boîte de vitesses lors des changements de rapport.

A cet effet, l'invention a pour objet un système de commande pour une boîte de vitesses de véhicule, notamment de véhicule automobile, conforme à l'objet de la revendication 1.

Dans divers modes de réalisation du système selon l'invention, on peut éventuellement avoir recours en outre à l'une et/ou à l'autre des dispositions suivantes :
- la première noix et la deuxième noix sont des plaques qui sont sensiblement parallèles aux fourchettes, qui se déplacent transversalement au plan général de ces dernières et qui ont l'une de leurs extrémités par lesquelles elles sont déplacées et verrouillées, la première noix a son autre extrémité commandant le basculeur et le moyen de verrouillage est sensiblement au milieu de la première noix et en regard de l'autre extrémité de la deuxième noix ; - le pion, en saillie d'une face de la première noix, est disposé de manière que le pion puisse entrer en contact de la tranche de la plaque formant la deuxième noix ;
- les noix comportent chacune un étrier par lequel les noix sont déplacées et verrouillées et l'encoche de synchronisation est aménagée sur l'étrier de la deuxième noix ;
- les noix sont empilées, leurs étriers déterminent chacun un logement interne et les logements internes des étriers des noix verrouillées sont alignés ;
- un dispositif d'interverrouillage qui a d'une part une clé d'interverrouillage comportant deux pattes de verrouillage et d'autre part un doigt de commande monté mobile entre lesdites pattes, la clé et le doigt pouvant se débattre ensemble relativement aux noix pour que d'une part le doigt puisse commander le déplacement de l'une des noix et que d'autre part au moins l'une des pattes de verrouillage puisse verrouiller au moins l'une des autres noix ;
- le premier et le deuxième synchroniseur sont respectivement ceux des cinquième et quatrième rapports de démultiplication de la boîte de vitesses.

Par ailleurs, l'invention a également pour objet une boîte de vitesses comportant un arbre primaire et un arbre secondaire, des couples d'engrenages fixe et fou déterminant un rapport de démultiplication de marche avant, chaque engrenage fou pouvant être en prise avec l'arbre qui le porte par actionnement d'un synchroniseur et par crabotage de crabots associés audit engrenage fou. La boîte de vitesses comporte un système selon l'invention dont le pignon menant est solidaire à rotation de l'arbre primaire et dont le pignon mené est solidaire à rotation de l'arbre secondaire.

D'autres buts, caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue partielle en perspective de composants internes d'une boîte de vitesses ;
- la figure 2 est une vue en perspective d'un système de commande de changement de rapport selon l'invention ;
- la figure 3 est une vue en perspective de tiges, fourchettes et noix du système de commande de la figure 2 ;
- la figure 4 est une vue de dessus d'une partie des tiges, fourchettes et noix du système de commande de représenté à la figure 3, au point mort de tous les rapports de la boîte de vitesses ;
- la figure 5 est une vue de dessus d'une partie d'un basculeur et d'une fourchette du système de commande selon l'invention quand le rapport de marche arrière n'est pas sélectionné ;
- la figure 6 est une vue de dessus d'une partie d'un basculeur et d'une fourchette du système de commande selon l'invention quand le rapport de marche arrière est engagé ;
- la figure 7 est une vue en perspective d'un dispositif d'interverrouillage du système de commande et d'une partie des tiges, fourchettes, et noix du système de commande de la figure 2 ;
- la figure 8 est une vue de côté du dispositif d'interverrouillage en regard des noix correspondantes qui sont représentées en traits pointillés, au point mort de tous les rapports de la boîte de vitesses ;
- la figure 9 est une vue en perspective d'une partie du dispositif d'interverrouillage et d'une partie des noix correspondantes du système de commande, lorsque le dispositif d'interverrouillage est en position de

sélection du cinquième rapport ou de la marche arrière de la boîte de vitesses ;
- la figure 10 est une vue en perspective du dispositif d'interverrouillage et d'une partie des noix correspondantes du système de commande, lorsque le dispositif d'interverrouillage est en position de sélection du cinquième rapport ou de la marche arrière de la boîte de vitesses ;
- la figure 11 est une vue de dessus d'une partie des tiges, fourchettes et noix du système de commande représentés à la figure 3, lorsque le cinquième rapport de la boîte de vitesses est engagé
- la figure 12 est une vue de côté montrant des pignons de marche arrière.

Sur les différentes figures, les mêmes références désignent des éléments identiques ou similaires.

Dans la description qui va suivre, un repère est indiqué pour faciliter la lecture. La direction désignée X sur le repère est dite longitudinale, la direction désignée Y est dite transversale, la direction désignée Z est dite verticale. Dans le véhicule, les composants de la boîte de vitesses peuvent être orientés différemment de l'orientation indiquée sur les figures.

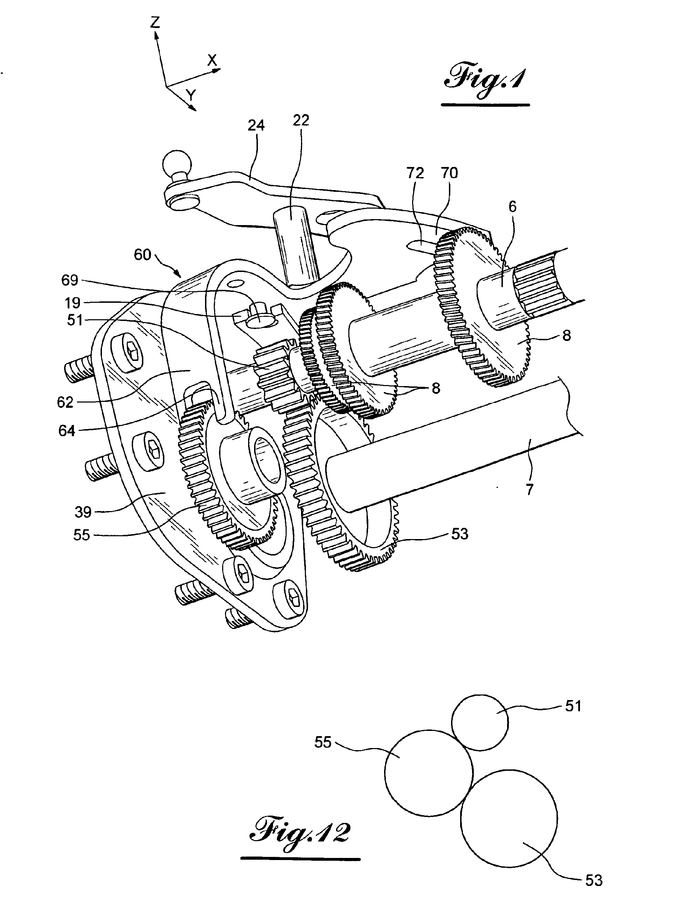

A la figure 1, les composants de boîte de vitesses représentés comprennent un arbre primaire 6 qui est relié au moteur du véhicule par l'intermédiaire d'un embrayage et qui est orienté dans la direction longitudinale X sur les dessins. L'arbre primaire 6 porte des pignons dits fixes 8 car ils sont solidaires dudit arbre. Chaque pignon 8 est engrené avec un pignon dit fou pour déterminer un rapport de marche avant de la boîte de vitesses. Les pignons fous sont montés libres à rotation sur un arbre secondaire 7 relié aux roues motrices du véhicule. Les pignons fous ne sont pas représentés sur les figures.

Quand un rapport est engagé, l'un des pignons fous de la boîte doit être solidaire à rotation de l'arbre secondaire 7, par accouplement de dentures de crabots aménagées d'une part sur le pignon fou correspondant et d'autre part sur un moyeu baladeur monté coulissant sur l'arbre secondaire 7. Pour engager un rapport en crabotant le pignon fou et le moyeu baladeur, il faut que le régime du pignon fou, dépendant du régime moteur du fait de l'engrènement avec le pignon fixe 8, soit proche du régime de l'arbre secondaire 7, dépendant de la vitesse du véhicule.

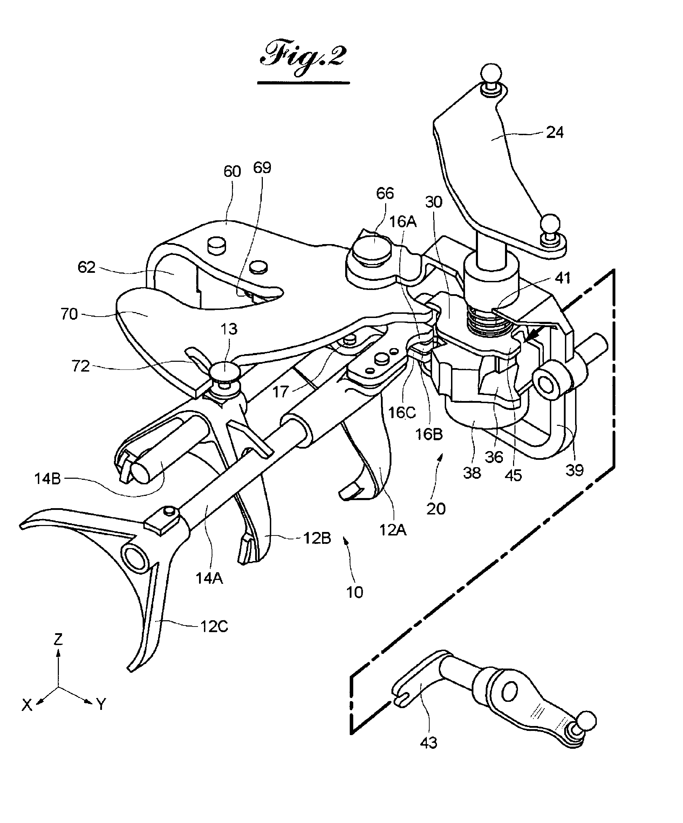

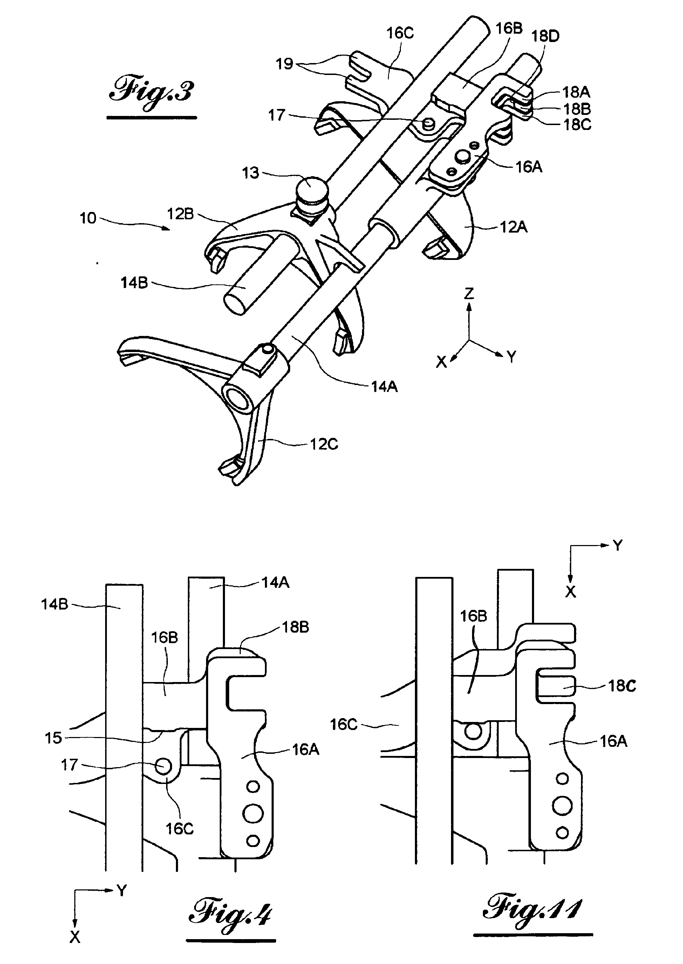

Pour égaliser les régimes du pignon fou et de l'arbre secondaire 7 avant crabotage sans choc, des synchroniseurs à bagues de friction sont utilisés, un synchroniseur étant associé à chaque pignon fou et à son baladeur. De tels synchroniseurs sont connus en eux-mêmes. Les synchroniseurs sont commandés par un système de commande de changement de rapport 10 qui comporte des fourchettes supportées par des tringles (figures 2 et 3).

Une première 12A des fourchettes est montée coulissante sur une première 14A des tringles pour commander les synchroniseurs du premier et du deuxième rapport de la boîte de vitesses. La première fourchette 12A est solidaire d'une première noix de commande 16A ayant un étrier 18A à son extrémité libre. La largeur du logement interne de l'étrier 18A selon la direction X est constante.

Une deuxième 12B des fourchettes est solidaire de la seconde 14B des tringles pour commander les synchroniseurs du troisième et du quatrième rapport de la boîte de vitesses. La deuxième fourchette 12B comporte un galet supérieur 13 disposé au dessus de la seconde tringle 14B qui est solidaire d'une deuxième noix de commande 16B ayant un étrier 18B à son extrémité libre.

Selon la direction X, la largeur du logement interne de l'étrier 18A à proximité de son embouchure est identique à la largeur du logement interne de l'étrier 18A. Par contre, sur l'une des branches de l'étrier 18B, une encoche 18D est aménagée à proximité du fond du logement interne, si bien que la largeur du fond du logement interne de l'étrier 18B selon la direction X est plus grande que la largeur de l'embouchure dudit logement.

Une troisième fourchette 12C est solidaire de la première tringle 14A pour commander le synchroniseur du cinquième rapport de la boîte de vitesses. Pour la commande de ce synchroniseur, la première tringle 14A est solidaire d'une troisième noix de commande 16C ayant un étrier 18C à une de ses extrémités libres. La largeur du logement interne de l'étrier 18C selon la direction X est constante et identique à la largeur du logement interne de l'étrier 18A.

En outre, à son autre extrémité libre, la troisième noix de commande 16C est équipée d'une fourche 19 à deux dents de longueurs inégales. La fourche 19 est utilisée lors du passage de la marche arrière, comme il sera expliqué plus en détail ultérieurement.

La troisième noix de commande 16C comporte un pion de verrouillage 17 en saillie de sa face supérieure. Le pion de verrouillage 17 est en regard d'une face de butée 15 qui est située sur une partie de la tranche de la deuxième noix 16B et qui est perpendiculaire à la deuxième tringle 14B. Le pion de verrouillage 17 peut entrer en contact de la face de butée 15 lors des débattements des noix selon la direction X, dans les conditions de fonctionnement de la boîte de vitesses détaillées ultérieurement.

Les noix 16A, 16B et 16C sont des tôles dont les étriers 18A, 18B et 18C sont parallèles et sont disposés sensiblement les uns contre les autres. Comme représenté aux figures 3 et 4, les logements internes des étriers 18A, 18B et 18C sont alignés au jeu près quand la boîte de vitesses est au point mort. Le déplacement des étriers 18A, 18B et 18C pour déplacer les noix 16A, 16B et 16C lors des changements de vitesses sera expliqué ultérieurement.

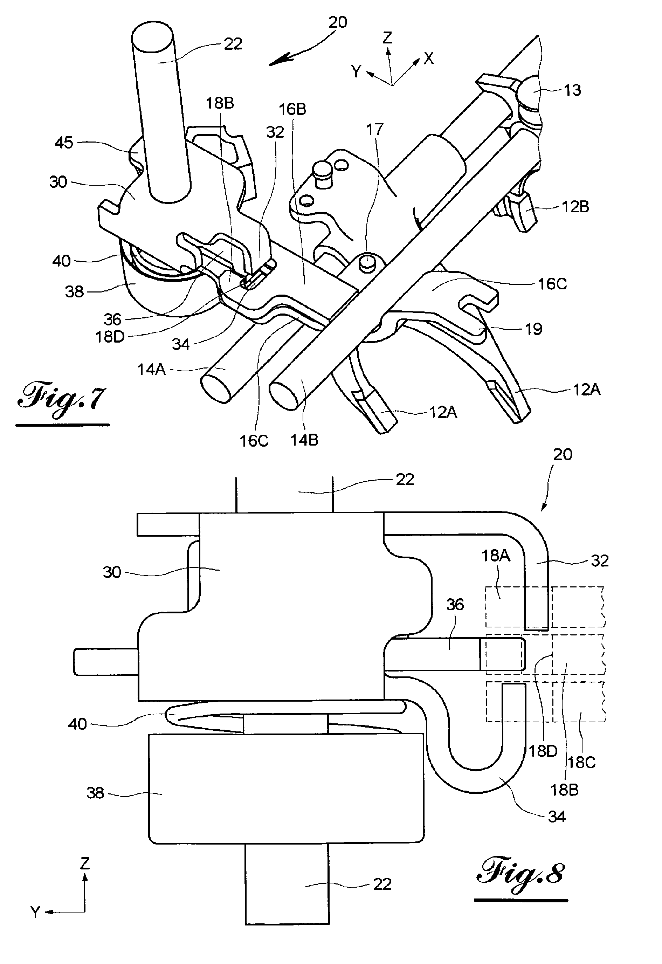

Le système de commande de changement de rapport 10 comporte un dispositif d'interverrouillage 20 (figure 7) qui sert à commander les étriers 18A, 18B et 18C des noix 16A, 16B et 16C, et dont un axe de changement de rapport 22 est solidaire d'un bras de commande de passage de rapport 24 relié au levier de changement de vitesses du véhicule, le bras 24 servant à l'engagement ou au dégagement d'un rapport.

Le dispositif d'interverrouillage 20 comporte une clé d'interverrouillage 30 dont une cage en tôle présente une section sensiblement en C en ayant d'une part un flasque supérieur dont une extrémité libre est pourvue d'un patte supérieure de verrouillage 32 et d'autre part un flasque inférieur dont une extrémité libre est pourvue d'un patte inférieure de verrouillage 34. Les pattes de verrouillage 32 et 34 ont leurs extrémités inférieures d'une part distantes sensiblement de l'épaisseur d'une tôle formant chacune des noix 16A, 16B et 16C et d'autre part presque en regard l'une de l'autre en étant décalées dans la direction Y, comme représenté à la figure 8, pour des raisons qui seront expliquées ultérieurement.

Les pattes de verrouillage 32 et 34 ont leur largeur qui correspond au jeu près à la largeur du logement interne des étriers 18A, 18B, 18C à proximité de leur embouchure.

Les pattes de verrouillage 32 et 34 sont montées verticalement en regard du logement des étriers 18A, 18B et 18C. Lesdites pattes peuvent coulisser verticalement dans les logements internes desdits étriers pendant des débattements verticaux de la clé 30. Les moyens permettant de tels débattements de la clé 30 seront détaillés ultérieurement.

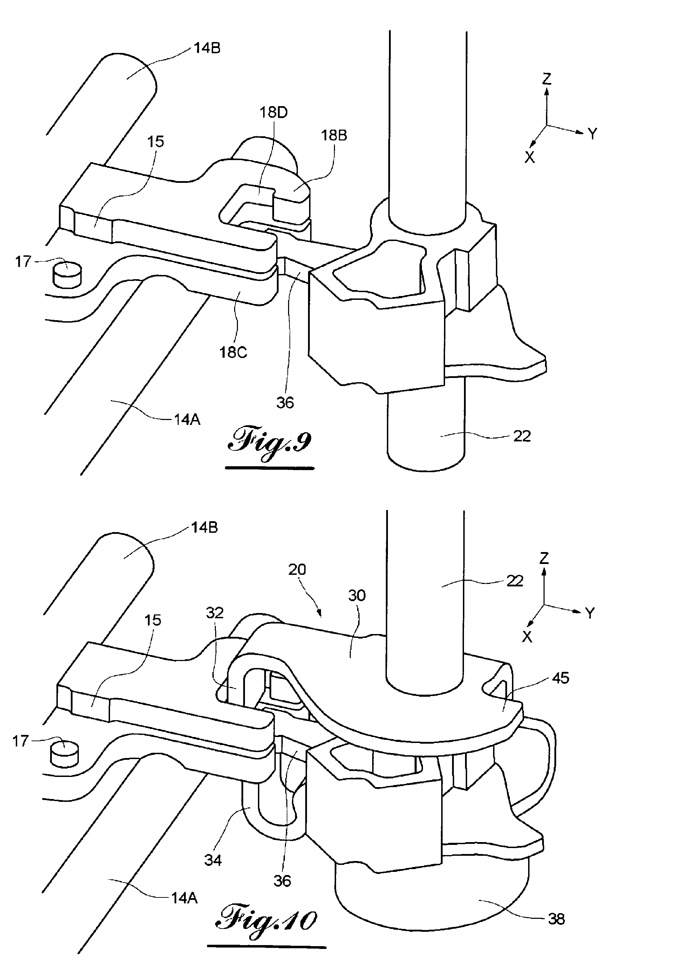

La patte inférieure de verrouillage 34 est montée au droit de la moitié du logement des étriers 18A, 18B, 18C située à proximité des embouchures desdits logements, si bien que, du fait des largeurs sensiblement égales de ladite patte 34 et des logements (figures 7 et 10, ladite patte 34 peut verrouiller les changements de rapport en empêchant le déplacement des noix dans la direction X. La patte 34 n'est pas en regard de l'encoche 18D de l'étrier 18B. Comme il sera expliqué plus en détail ultérieurement, la patte 34 peut verrouiller complètement d'une part l'étrier 18B de la noix 16B pour complètement empêcher l'engagement des troisième et quatrième rapports et d'autre part l'étrier 18C de la noix 16C pour complètement empêcher l'engagement du cinquième rapport et du rapport de marche arrière.

La patte supérieure de verrouillage 32 est montée au droit de la moitié du logement des étriers 18A, 18B, 18C située du côté du fond desdits logements, comme représenté clairement à la figure 10. Ladite patte 34 peut empêcher d'une part le déplacement de la première noix 16A dans les deux sens selon la direction X et d'autre part le déplacement de la deuxième noix 16B dans un sens selon la direction X, c'est-à-dire dans le sens correspondant au passage du troisième rapport. La patte supérieure 34 peut être emboîtée dans l'encoche 18D de l'étrier 18B appartenant à la deuxième noix de commande 16B quand la deuxième noix 16B est déplacée dans le sens d'activation du synchroniseur du quatrième rapport de la boîte de vitesses, c'est-à-dire quand l'étrier 18B est décalé vers la droite en prenant la figure 7 comme référence. Comme il sera expliqué plus en détail ultérieurement, la patte 32 peut verrouiller complètement d'une part l'étrier 18A de la noix 16A pour complètement empêcher l'engagement des premier et deuxième rapports et d'autre part l'étrier 18B de la noix 16B pour complètement empêcher l'engagement du troisième rapport. En outre, la patte 32 peut verrouiller partiellement l'étrier 18B de la noix 16B pour autoriser l'actionnement du synchroniseur du quatrième rapport mais interdire l'engagement complet de ce rapport.

Le dispositif d'interverrouillage 20 comporte un doigt 36 d'engagement et de dégagement de rapport servant au déplacement des noix 16A, 16B et 16C en actionnant les étriers 18A, 18B, 18C.

Le doigt 36 est monté entre les flasques de la clé 30 en étant solidaire de l'axe de changement de rapport 22 pour pouvoir tourner avec ce dernier. Un tronçon d'extrémité du doigt 36 est situé en regard de la moitié du logement interne des étriers 18A, 18B, 18C située à proximité des embouchures desdits logements. Lors du pivotement du doigt 36, les étriers 18A, 18B, 18C sont poussés pour coulisser horizontalement entre la patte supérieure 32 et la patte inférieure 34 pour commander les synchroniseurs.

Le dispositif d'interverrouillage 20 comporte une coupelle inférieure 38 dont la paroi de fond est en appui sur un bâti 39 de la boîte de vitesses. La clé 30 est solidaire de la coupelle inférieure 38. Une deuxième coupelle, non représentée aux figures, est coulissante à l'intérieur de la coupelle inférieure 38 en étant maintenue en appui sur une butée de la première coupelle 38 par l'intermédiaire d'un premier ressort en spirale 40 coaxial à l'axe 22. Un second ressort en spirale 41 coaxial à l'axe 22 est interposé entre le flasque supérieur de la clé 30 et le bâti 39. Les ressorts 40 et 41 permettent de positionner la clé 30 verticalement en position point-mort pour permettre un débattement vertical de la clé 30 en sollicitant les ressorts 40 et 41. Un tel débattement est obtenu par actionnement d'un bras de sélection de rapport 43 de type connu en lui-même est monté solidaire d'une languette horizontale 45 appartenant au flasque supérieur de la clé 30 (figure 2). Le bras de sélection 43 est relié au levier de vitesse du véhicule par des moyens connus.

Les composants de boîte de vitesses représentés à la figure 1 comportent aussi des pignons de marche arrière. Ces pignons sont à dentures droites et sont constitués par un pignon menant 51 solidaire de l'arbre primaire 6, un pignon mené 53 solidaire de l'arbre secondaire et un pignon baladeur 55 qui est monté coulissant sur un arbre de marche arrière orienté dans la direction X et qui est solidaire à rotation de ce dernier.

A la figure 1, le pignon baladeur 55 est représenté dans une position libre à laquelle le rapport de marche arrière n'est pas engagé. Quand le rapport de marche arrière est engagé, le pignon baladeur 55 est engrené avec le pignon menant 51 et avec le pignon mené 53. L'engagement de la marche arrière est effectué véhicule à l'arrêt, quand l'arbre secondaire et le pignon mené 53 ne tournent pas, après freinage et arrêt de l'arbre primaire 6 pour que le pignon menant 51 ne tourne pas non plus. Le freinage sera expliqué plus en détail ultérieurement.

Le pignon baladeur 55 est commandé à coulissement par un basculeur 60 faisant partie du système de commande de changement de rapport 10. Le basculeur 60 comporte un bras cintré 62 dont une fourche d'extrémité libre 64 à deux dents fait coulisser le pignon baladeur 55 quand le basculeur 60 pivote. Le basculeur pivote par rapport au bâti 39 de la boîte de vitesses, selon un axe 66 de pivot vertical.

Le bras cintré 62 porte sur sa face inférieure un pion inférieur 69 en regard de la fourche 19 de la troisième noix 16C (figure 1). La dent la plus longue de la fourche 19 est, selon la direction X, au niveau du pion inférieur 69. Ainsi, quand la fourche 19 se déplace vers la droite à la figure 1 ou sur la gauche à la figure 2, alors cette dent la plus longue pousse le pion inférieur 69 et la fourche 19 fait pivoter le basculeur 60 autour de son axe de pivot 66. Par contre, si la fourche 19 se déplace vers la gauche à la figure 1 ou sur la droite à la figure 2, alors sa dent la plus courte n'entre pas en contact avec le pion inférieur 69 et la fourche 19 n'actionne pas le basculeur 60.

En outre, le basculeur 60 comporte un deuxième bras 70 qui constitue un bras à came. Le deuxième bras 70 est horizontal et il est sensiblement en arc de cercle centré sur l'axe de pivot 66, à distance du pion inférieur 19 et de l'axe de pivot 66.

Le deuxième bras 70 délimite une fente 72 (figure 2) dont les bords verticaux forment une glissière de panière à pouvoir guider le galet 13 solidaire de la deuxième fourchette 12B.

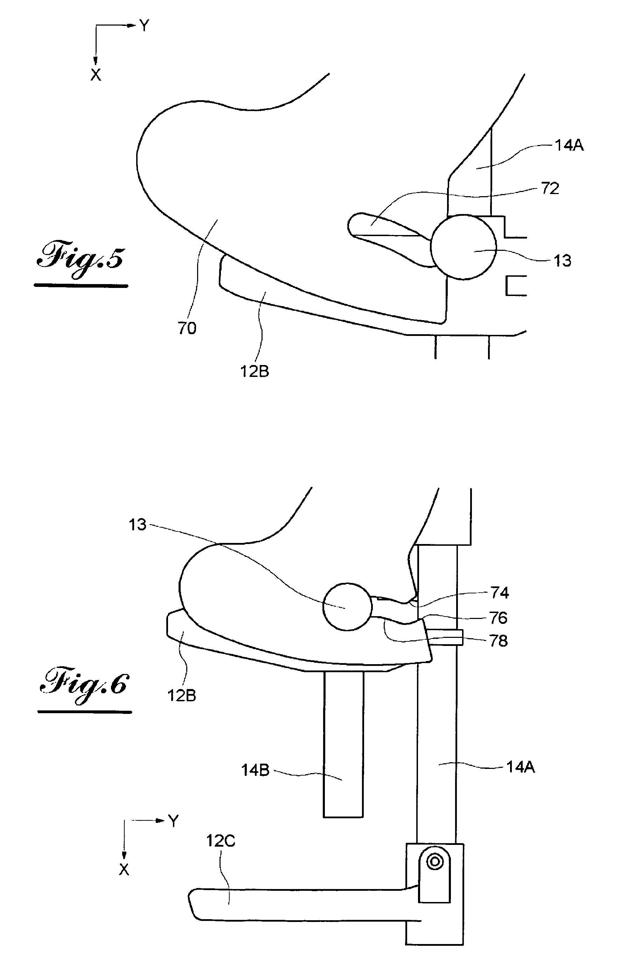

Comme représenté sur les figures 5 et 6, la fente 72 détermine un premier tronçon arqué de synchronisation 74 ayant d'une part son centre de courbure proche de l'axe de pivot 66 et d'autre part une embouchure 76 à son extrémité. La fente 76 détermine un second tronçon arqué de point mort 78 dont le centre de courbure est sensiblement à l'opposé de celui du premier tronçon de sorte que la courbure du second tronçon soit inversée par rapport à la courbure du premier tronçon et que le fond du second tronçon soit sensiblement au niveau de l'embouchure 76 dans une direction perpendiculaire à la seconde tringle 14B.

Le fonctionnement du système de commande de changement de rapport 10 ressort déjà en partie de la description qui précède et va maintenant être détaillé.

Quand la boîte de vitesses est au point mort, les étriers 18A, 18B et 18C sont verticalement alignés, comme représenté aux figures 3 et 4. Le doigt 36 est en position verticalement neutre dans l'étrier 18B de la deuxième noix 16B, comme représenté aux figures 7 et 8. La patte supérieure de verrouillage 32 verrouille l'étrier 18A de la noix 16A et la patte inférieure de verrouillage 34 verrouille l'étrier 18C de la noix 16C.

Pour passer le premier rapport ou le deuxième rapport, le conducteur du véhicule actionne tout d'abord le levier de vitesses selon un mouvement de sélection qui positionne la clé 30 en position haute par l'intermédiaire du bras de sélection 43.

Dans la position haute de la clé 30, la patte inférieure de verrouillage 34 verrouille l'étrier 18C de la noix 16C et verrouille l'étrier 18B de la noix 16B, si bien que les synchroniseurs des troisième à cinquième rapports ne peuvent pas être actionnés, tout comme le passage de la marche arrière qui ne peut pas être opéré. Dans la position haute de la clé 30, le doigt 36 est à la hauteur de l'étrier 18A de la première noix 16A.

Ensuite, quand le conducteur manipule le levier de vitesse selon un mouvement d'engagement, il fait pivoter le bras de commande 24 et l'axe de changement de rapport 22, ce qui fait pivoter le doigt 36. Le pivotement du doigt 36 fait appuyer le tronçon d'extrémité libre du doigt 36 sur l'une ou l'autre des branches de l'étrier 18A de la première noix 16A. Le doigt 36 pousse selon l'axe X la première noix 16A et la première fourchette 12A, ce qui fait frotter le synchroniseur correspondant avant engagement complet des crabots du rapport considéré.

Pour dégager le rapport, le mouvement inverse du levier de vitesses fait déplacer la noix 16A en sens inverse afin qu'elle revienne en position de point mort dans laquelle le synchroniseur est en position neutre et les crabots correspondant déverrouillés.

Pour l'engagement et le dégagement des troisième et quatrième rapports, le principe de fonctionnement est le même, en mettant en oeuvre la deuxième noix 16B et la deuxième fourchette 12B. Pour ces deux rapports, la clé 30 est en position verticalement neutre, le doigt 36 est dans le logement interne de l'étrier 18B de la deuxième noix 16B et les pattes de verrouillage 32 et 34 de la clé 30 verrouillent respectivement les étriers 18A et 18C (figure 8).

Pour l'engagement du cinquième rapport, le principe de fonctionnement est le même, en mettant en oeuvre la troisième noix 16C et la troisième fourchette 12C, la clé 30 étant en position basse. Le doigt 36 est dans le logement interne de l'étrier 18C de la troisième noix 16C (figure 9) et la patte supérieure de verrouillage 32 de la clé 30 verrouille l'étrier 18A dans ses deux sens de déplacement et l'étrier 18B dans un de ses sens de déplacement, en l'espèce son sens de déplacement correspondant à l'actionnement du synchroniseur du troisième rapport. L'encoche 18D autorise en effet un déplacement de l'étrier 18C dans le sens de l'actionnement du synchroniseur du quatrième rapport.

Lors du pivotement du doigt 36 pour engager le cinquième rapport, la troisième noix 16C et la troisième fourchette 12C sont déplacées par coulissement vers la droite à la figure 3 (sens négatif par rapport au repère orthonormé de ces figures), vers la gauche aux figures 1 et 7 et vers le haut à la figure 11.

Lors de l'engagement du cinquième rapport, comme la branche la plus courte de la fourche 19 de la troisième noix 16B n'actionne pas le pion inférieur 69, le basculeur 60 n'est pas actionné.

Lorsque le cinquième rapport est engagé, le pion de verrouillage 17 aménagé sur la troisième noix 16C est en appui sur la face de butée 15 aménagée sur la deuxième noix 16B, si bien que l'étrier 18C de la deuxième noix 16B est verrouillé, le synchroniseur du quatrième rapport ne pouvant alors pas être rendu actif accidentellement.

Pour l'engagement du rapport de marche arrière, la clé d'interverrouillage 30 est en position verticalement basse et le doigt 36 est dans le logement interne de l'étrier 18C de la troisième noix 16C, comme pour l'engagement et le dégagement du cinquième rapport.

Le début du pivotement du doigt 36 fait coulisser la troisième noix 16C vers la droite aux figures 1 et 7 (sens positif par rapport au repère orthonormé ce ces figures), c'est-à-dire vers la gauche aux figures 2 et 3. La dent la plus longue de la fourche 19 pousse le pion inférieur 69 et le basculeur 60 pivote. Le pivotement du basculeur 60 fait venir s'emboîter le premier tronçon arqué de synchronisation 74 et le galet supérieur 13, ce qui actionne la deuxième fourchette 12B et le synchroniseur du quatrième rapport. L'actionnement de la deuxième fourchette 12B est possible du fait que la deuxième noix 16B associée à la deuxième fourchette 12B a son étrier 18B pourvu de l'encoche 18D, cette dernière autorisant le décalage de la deuxième noix 16B pour l'actionnement du synchroniseur du quatrième rapport, sans autoriser le crabotage de ce rapport. Dit autrement, l'échancrure 18D autorise un déverrouillage partiel du quatrième rapport. Comme ce synchroniseur fait correspondre la vitesse des pignons du quatrième rapport avec celles de l'arbre secondaire 7 qui ne tourne pas quand le véhicule est à l'arrêt, il freine l'arbre primaire et le pignon menant 51 jusqu'à leur arrêt, le pignon mené 53 étant également à l'arrêt du fait qu'il est solidaire de l'arbre secondaire 7.

La fin du pivotement du doigt 36 fait coulisser la troisième noix 16C et fait pivoter le basculeur 60 alors que le deuxième tronçon arqué de point mort 78 et le galet supérieur 13 s'emboîtent, si bien que le synchroniseur du quatrième rapport est désactivé. Pendant la fin du pivotement du doigt 36 et du basculeur 60, le pignon baladeur 55 est engrené avec le pignon mené 53 et le pignon menant 51 qui sont à l'arrêt.

Lors du dégagement de la marche arrière, les mouvements sont inversés et la boîte de vitesses revient au point mort.

Avantageusement, le décalage des pattes supérieures 32 et inférieure 34 de verrouillage permet d'utiliser deux zones de verrouillage sur les étriers des fourchettes, de façon à permettre de supprimer l'interaction de déverrouillage du quatrième rapport en sélection des premier et deuxième rapports. La patte de verrouillage inférieure 34 agit sur la zone d'appui du doigt de passage de vitesse 36, c'est-à-dire la zone à proximité de l'embouchure des logements internes des étriers. La patte de verrouillage supérieure 32 agit sur une zone en décalage de la zone d'appui du doigt de passage de vitesse 36 et en correspondance de l'échancrure 18D nécessaire au fonctionnement du frein de marche arrière, c'est-à-dire la zone à proximité du fond des logements internes des étriers. Ainsi, les pattes décalées permettent soit de verrouiller la noix 16B pourvue de l'encoche quand elle est en regard d'une première 34 desdites pattes, soit d'autoriser le déplacement de la noix 16B pourvue de l'encoche quand elle est en regard du doigt 36 ou quand d'une part le doigt 36 est en regard d'une autre noix 16A, 16C et d'autre part la noix 16B pourvue de l'encoche est actionnée pour l'engagement de la marche arrière et est en regard de la seconde 32 des pattes.

Avantageusement, la clé d'interverrouillage 30, l'encoche 18D et le basculeur à fente 72 à deux tronçons arqués 74 et 78 respectivement pour la synchronisation et le dégagement de synchroniseur permettent un déverrouillage du seul rapport supportant le frein de marche arrière, ici le quatrième rapport de la boîte de vitesses, sans interaction de déverrouillage non souhaité lorsque le rapport de marche arrière est engagé ou lorsque son rapport opposé est engagé, ici le cinquième rapport de la boîte de vitesses. Sont ainsi supprimés les risques de « léchage » du synchroniseur du quatrième rapport, tout comme les risques de traînée importante de la boîte de vitesses en marche arrière ou en cinquième rapport engagé et les risques d'usure prématurée du synchroniseur du quatrième rapport de marche avant.

Avantageusement, la clé selon l'invention est particulièrement simple à réaliser. La sécurisation du verrouillage est étriers est efficace, tout en étant réalisée avec des pièces simples à réaliser et à assembler. Il en va de même pour le basculeur et la noix de passage de la marche arrière.

## Revendications

1. Système de commande pour une boîte de vitesses de véhicule, notamment de véhicule automobile, comprenant :
- un basculeur (60) apte à déplacer un pignon baladeur (55) de marche arrière pour l'engrener d'une part sur un pignon menant (51) de marche arrière et d'autre part sur un pignon mené (53) de marche arrière, le pignon menant et le pignon mené étant solidaires d'arbres (6, 7) de la boite de vitesses portant des engrenages fixes (8) et fous de rapports de marche avant de la boite de vitesses,
- des fourchettes (12A, 12B, 12C) déplaçables pour actionner des synchroniseurs et des crabots associés auxdits engrenages de marche avant (8),
- une noix de commande (16A, 16B, 16C) associée à chacune des fourchettes (12A, 12B, 12C), chaque noix pouvant alternativement être déplacée avec sa fourchette ou être verrouillée pour interdire son déplacement, une première (16C) desdites noix pouvant soit déplacer une première (12C) desdites fourchettes qui actionne un premier synchroniseur d'un premier rapport de marche avant, soit commander le basculeur (60) pour qu'il déplace le pignon baladeur (55) et qu'il commande simultanément une deuxième (12B) desdites fourchettes de manière que cette dernière actionne un deuxième synchroniseur d'un deuxième rapport de marche avant pour freiner le pignon menant (51) par l'intermédiaire des engrenages (8) du deuxième rapport, la deuxième fourchette (12B) étant associée à une deuxième (16B) desdites noix pourvue d'une encoche de synchronisation (18D) permettant à la deuxième noix (16B) de ne pas être verrouillée quand la deuxième fourchette (12B) est commandée par le basculeur (60), ledit système étant **caractérisé en ce que** :
- la première noix (16C) comporte un pion (17) disposé en saillie d'une face de la première noix (16C) qui, lorsque la première noix actionne le premier synchroniseur par l'intermédiaire de la première fourchette (12C), est en contact avec la deuxième noix (16B) pour que cette dernière soit verrouillée et n'actionne pas le deuxième synchroniseur.

2. Système selon la revendication précédente, **caractérisé en ce que** la première noix (16C) et la deuxième noix (16B) sont des plaques qui sont sensiblement parallèles aux fourchettes (12A, 12B, 12C), qui se déplacent transversalement au plan général de ces dernières et qui ont l'une de leurs extrémités par lesquelles elles sont déplacées et verrouillées, **en ce que** la première noix (16C) a son autre extrémité commandant le basculeur (60) et **en ce que** le moyen de verrouillage (17) est sensiblement au milieu de la première noix (16C) et en regard de l'autre extrémité de la deuxième noix (16B).

3. Système selon la revendication précédente, **caractérisé en ce que** le pion en saillie d'une face de la première noix (16C) est disposé de manière que le pion puisse entrer en contact de la tranche (15) de la plaque formant la deuxième noix (16B).

4. Système selon l'une quelconque des revendications précédentes, **caractérisé en ce que** les noix (12A, 12B, 12C) comportent chacune un étrier (18A, 18B, 18C) par lequel les noix sont déplacées et verrouillées et **en ce que** l'encoche de synchronisation (18D) est aménagée sur l'étrier (18B) de la deuxième noix (16B).

5. Système selon la revendication précédente, **caractérisé en ce que** les noix (12A, 12B, 12C) sont empilées, **en ce que** leurs étriers (18A, 18B, 18C) déterminent chacun un logement interne et **en ce que** les logements internes des étriers des noix verrouillées sont alignés.

6. Système selon l'une quelconque des revendications précédentes, **caractérisé en ce qu'**il comporte un dispositif d'interverrouillage (20) ayant d'une part une clé d'interverrouillage (30) comportant deux pattes de verrouillage (32, 34) et d'autre part un doigt de commande (36) monté mobile entre lesdites pattes, la clé (30) et le doigt (36) pouvant se débattre ensemble relativement aux noix (12A, 12B, 12C) pour que d'une part le doigt puisse commander le déplacement de l'une des noix et que d'autre part au moins l'une des pattes de verrouillage puisse verrouiller au moins l'une des autres noix.

7. Système selon l'une quelconque des revendications précédentes, **caractérisé en ce que** le premier et le deuxième synchroniseur sont respectivement ceux des cinquième et quatrième rapports de démultiplication de la boîte de vitesses.

8. Boîte de vitesses comportant un arbre primaire et un arbre secondaire, des couples d'engrenages fixe (8) et fou déterminant un rapport de démultiplication de marche avant, chaque engrenage fou pouvant être en prise avec l'arbre (7) qui le porte par actionnement d'un synchroniseur et par crabotage de crabots associés audit engrenage fou, **caractérisée en ce qu'**elle comporte un système selon l'une quelconque des revendications précédentes, **en ce que** son pignon menant (51) est solidaire à rotation de l'arbre primaire (6) et **en ce que** le pignon mené (53) est solidaire à rotation de l'arbre secondaire (7).

## Claims

1. Control system for a gearbox of a vehicle, in particular a motor vehicle, comprising:
- an over-centre device (60) for displacing a reverse-gear sliding gear (55) so as to mesh it on the one hand with a reverse-gear drive pinion (51) and on the other hand with a reverse-gear driven pinion (53), the drive pinion and the driven pinion being integral with shafts (6, 7) of the gearbox carrying fixed (8) and idling gearwheels of forward gear ratios of the gearbox,
- forks (12A, 12B, 12C) which can be displaced to actuate synchronisers and clutch sleeves associated with said forward-gear gearwheels (8),
- a control cross (16A, 16B, 16C) associated with each of the forks (12A, 12B, 12C), it being possible for each cross to be displaced with the fork thereof or alternatively to be locked so as to prevent displacement thereof, a first (16C) of said crosses being able either to displace a first (12C) of said forks, which actuates a first synchroniser of a first forward gear ratio, or to control the over-centre device (60) in such a way that said device displaces the sliding gear (55) and simultaneously controls a second (12B) of said forks, in such a way that said fork actuates a second synchroniser of a second forward gear ratio so as to brake the drive pinion (51) via the gearwheels (8) of the second ratio, the second fork (12B) being associated with a second (16B) of said crosses provided with a synchronisation notch (18D) which makes it possible for the second cross (16B) not to be locked when the second fork (12B) is controlled by the over-centre device (60), said system being **characterised in that**:
- the first cross (16C) comprises a pin (17) arranged projecting from a face of the first cross (16C), which, when the first cross actuates the first synchroniser via the first fork (12C), is in contact with the second cross (16B) in such a way that said cross is locked and does not actuate the second synchroniser.

2. System according to the preceding claim, **characterised in that** the first cross (16C) and the second cross (16B) are plates, which are substantially parallel to the forks (12A, 12B, 12C), are displaced transverse to the general plane of said forks, and are displaced and locked by one of the ends thereof, **in that** the other end of the first cross (16C) controls the over-centre device (60), and **in that** the locking means (17) is substantially in the centre of the first cross (16C) and opposite the other end of the second cross (16B).

3. System according to the preceding claim, **characterised in that** the pin projecting from a face of the first cross (16C) is arranged in such a way that the pin can come into contact with the edge (15) of the plate forming the second cross (16B).

4. System according to any one of the preceding claims, **characterised in that** the crosses (12A, 12B, 12C) each comprise a calliper (18A, 18B, 18C) which displaces and locks the crosses, and **in that** the synchronisation notch (18D) is arranged on the calliper (18B) of the second cross (16B).

5. System according to the preceding claim, **characterised in that** the crosses (12A, 12B, 12C) are stacked, **in that** the callipers (18A, 18B, 18C) thereof each define an internal recess, and **in that** the internal recesses of the callipers of the locked crosses are aligned.

6. System according to any one of the preceding claims, **characterised in that** it comprises an interlocking device (20) having on the one hand an interlocking key (30) comprising two locking tabs (32, 34) and on the other hand a control finger (36) mounted so as to be movable between said tabs, the key (30) and the finger (36) being able to work together against the crosses (12A, 12B, 12C) in such a way that on the one hand the finger can control the displacement of one of the crosses and on the other hand at least one of the locking tabs can lock at least one of the other crosses.

7. System according to any one of the preceding claims, **characterised in that** the first and second synchroniser are those of the fifth and fourth reduction gears respectively of the gearbox.

8. Gearbox comprising a primary shaft and a secondary shaft, fixed (8) and idling gearwheel torques determining a forward-gear reduction ratio, each idling gearwheel being able to engage with the shaft (7) carrying it by actuating a synchroniser and by jaw-clutching clutch sleeves associated with said idling gearwheel, **characterised in that** it comprises a system according to any one of the preceding claims, **in that** the drive pinion (51) thereof is rotationally engaged with the primary shaft (6) and **in that** the driven pinion (53) is rotationally engaged with the secondary shaft (7).

## Patentansprüche

1. Steuerungssystem für ein Schaltgetriebe eines Fahrzeugs, insbesondere eines Kraftfahrzeugs, umfassend:
- einen Wippschalter (60), dazu geeignet, einen Schraubtrieb (55) des Rückwärtsgangs zu verschieben, um ihn einerseits auf einem Antriebszahnrad (51) des Rückwärtsgangs und andererseits auf einem Abtriebszahnrad (53) des Rückwärtsgangs in Eingriff zu bringen, wobei das Antriebszahnrad und das Abtriebszahnrad fest mit Wellen (6, 7) des Schaltgetriebes verbunden sind, die feste (8) und lose Getriebe der Vorwärtsgangverhältnisse des Schaltgetriebes tragen.
- verschiebbare Schaltgabeln (12A, 12B, 12C), um Synchronisierungen und Klauen, verbunden mit den Getrieben des Vorwärtsgangs (8), zu betätigen.
- eine Kronenkupplung (16A, 16B, 16C), verbunden mit jeder der Schaltgabeln (12A, 12B, 12C), wobei jede Krone alternativ mit ihrer Schaltgabel verschoben oder verriegelt werden kann, um ihre Verschiebung zu verhindern, wobei eine erste (16C) der Kronen entweder eine erste (12C) der Schaltgabeln verschieben kann, die eine erste Synchronisierung eines ersten Vorwärtsgangverhältnisses betätigt, oder den Wippschalter (60) steuern kann, damit er den Schraubtrieb (55) verschiebt und gleichzeitig eine zweite (12B) der Schaltgabeln so steuert, dass diese Letztere eine zweite Synchronisierung eines zweiten Vorwärtsgangverhältnisses betätigt, um das Antriebszahnrad (51) mit Hilfe der Getriebe (8) des zweiten Verhältnisses zu bremsen, wobei die zweite Schaltgabel (12B) mit einer zweien (16B) der Kronen verbunden ist, ausgestattet mit einer Synchronisierungsnut (18D), die es der zweiten Krone (16B) ermöglicht, nicht verriegelt zu sein, wenn die zweite Schaltgabel (12B) vom Wippschalter (60) gesteuert wird, wobei das System **dadurch gekennzeichnet ist, dass**:
- die erste Krone (16C) einen Stift (17) umfasst, der aus einer Seite der ersten Krone (16C) hervorspringend angebracht ist, der, wenn die erst Krone die erste Synchronisierung mit Hilfe der ersten Schaltgabel (12C) betätigt, mit der zweien Krone (16B) in Kontakt ist, damit diese letztere verriegelt wird und die zweite Synchronisierung nicht betätigt.

2. System nach dem vorhergehenden Anspruch, **dadurch gekennzeichnet, dass** die erste Krone (16C) und die zweite Krone (16B) Platten sind, die im Wesentlichen parallel zu den Schaltgabeln (12A, 12B, 12C) sind, die sich quer zur allgemeinen Ebene dieser Letzteren verschieben, und die eines ihrer Enden aufweisen, durch die sie verschoben und verriegelt werden, und **dadurch**, dass die erste Krone (16C) an ihrem anderen Ende den Wippschaler (60) steuert, und **dadurch**, dass sich das Verriegelungsmittel (17) im Wesentlichen in der Mittel der ersten Krone (16C) und gegenüber dem anderen Ende der zweiten Krone (16B) befindet.

3. System nach dem vorhergehenden Anspruch, **dadurch gekennzeichnet, dass** der Stift, hervorspringend aus einer Seite der ersten Krone (16C) so angebracht ist, dass der Stift mit der Scheibe (15) der Platte, die die zweite Krone (16B) bildet, in Kontakt treten kann.

4. System nach einem der vorhergehenden Ansprüche, **dadurch gekennzeichnet, dass** die Kronen (12A, 12B, 12C) jeweils einen Sattel umfassen (18A, 18B, 18C), durch den die Kronen verschoben und verriegelt werden, und **dadurch**, dass die Synchronisierungsnut (18D) auf dem Sattel (18B) der zweiten Krone (16B) angebracht ist.

5. System nach dem vorhergehenden Anspruch, **dadurch gekennzeichnet, dass** die Kronen (12A, 12B, 12C) gestapelt sind, **dadurch**, dass ihre Sättel (18A, 18B, 18C) jeweils ein internes Lager festlegen und **dadurch**, dass die internen Lager der Sättel der verriegelten Kronen ausgefluchtet sind.

6. System nach einem der vorhergehenden Ansprüche, **dadurch gekennzeichnet, dass** es eine Verriegelungsvorrichtung (20) umfasst, die einerseits einen Verriegelungsschlüssel (30) aufweist, umfassend zwei Verriegelungslaschen (32, 34), und andererseits einen Steuerstift (36), beweglich montiert zwischen den Stiften, wobei der Schlüssel (30) und der Stift (36) sich gemeinsam bezüglich der Kronen (12A, 12B, 12C) bewegen können, damit einerseits der Stift die Verschiebung der einen der Kronen steuern kann und andererseits mindestens der eine der Verriegelungsstifte mindestens eine der anderen Kronen verriegeln kann.

7. System nach einem der vorhergehenden Ansprüche, **dadurch gekennzeichnet, dass** die erste und die zweite Synchronisierung jeweils diejenigen des vierten und fünften Übersetzungsverhältnisses des Schaltgetriebes sind.

8. Schaltgetriebe, umfassend eine primäre Welle und eine sekundäre Welle, feste (8) und lose Getriebemomente, die ein Übersetzungsverhältnis des Vorwärtsgangs festlegen, wobei jedes lose Getriebe mit der Welle (7) verknüpft sein kann, die sie durch Betätigung einer Synchronisierung und durch Klauenkupplung mit Klauen, verbunden mit dem losen Getriebe, trägt, **dadurch gekennzeichnet, dass** es ein System nach einem der vorhergehenden Ansprüche umfasst, **dadurch**, dass sein Antriebszahnrad (51) in der Drehung mit der primären Welle (6) fest verbunden ist, und **dadurch**, dass das Abtriebszahnrad (53) in der Drehung mit der sekundären Welle (7) fest verbunden ist.
